Europäisches Patentamt

European Patent Office

Office européen des brevets

(19)

(11) Publication number:

**0 104 893**
**B1**

(12)

# EUROPEAN PATENT SPECIFICATION

(45) Date of publication of patent specification: **04.05.88**

(51) Int. Cl.⁴: **B 23 B 27/20, E 21 B 10/56**

(21) Application number: **83305630.2**

(22) Date of filing: **22.09.83**

(54) **Tool component.**

(30) Priority: **24.09.82 ZA 827030**

(43) Date of publication of application:
**04.04.84 Bulletin 84/14**

(45) Publication of the grant of the patent:
**04.05.88 Bulletin 88/18**

(84) Designated Contracting States:
**AT CH DE FR GB LI SE**

(56) References cited:
**EP-A-0 003 915**
**US-A-4 073 354**
**US-A-4 156 329**
**US-A-4 221 270**
**US-A-4 225 322**

**JOURNAL OF ENERGY RESOURCES
TECHNOLOGY, vol. 101, March 1979; DANIELS
et al. "Design , fabrication and field test
performance of slug-type diamond compacts
oil bits", pages 41-45**

(73) Proprietor: **DE BEERS INDUSTRIAL DIAMOND
DIVISION (PROPRIETARY) LIMITED**
**8th Floor 45 Main Street**
**Johannesburg Transvaal (ZA)**

(72) Inventor: **Phaal, Cornelius**
**34 Rutland Avenue Craighall Park**
**Johannesburg Transvaal (ZA)**

(74) Representative: **Jones, Alan John et al**
**CARPMAELS & RANSFORD 43 Bloomsbury
Square**
**London, WC1A 2RA (GB)**

(56) References cited:

**JOURNAL OF PETROLEUM TECHNOLOGY,
May 1975; EATON et al. "Manufactured
diamond cutters used in drilling bits", pages
543-551**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

This invention relates to tool components.

Abrasive compacts are well known in the art and are used for a variety of abrading operations such as cutting, drilling, grinding and the like. Abrasive compacts consist of a polycrystalline mass of bonded abrasive particles, the abrasive particle content of which is at least 70 percent by volume and generally 80 to 90 percent by volume. The abrasive particles may be self-bonded without the aid or use of a second or bonding phase. Alternatively, a second or bonding phase may be provided. The abrasive particles for compacts are invariably diamond or cubic boron nitride.

Abrasive compacts may be bonded to cemented carbide supports. Such bonded compacts are often referred to as composite compacts. Bonding between the compact and the carbide support may be direct but without the interposition of a braze layer. Alternatively, a bonding braze layer may be provided between the compact and the carbide support.

A more detailed description of abrasive compacts and composite compacts may be found in a number of published patent specifications, for example United States Patents 3,743,489, 3,767,371, 4,063,909 and 3,745,623.

European Patent Publication No. 0003915 describes an abrasive body suitable for mounting in a tool for abrading operations, the body including an abrasive compact comprising a mass of abrasive particles, present in an amount of at least 70 percent by volume of a compact, bonded into a hard conglomerate and support means covering a part of the surface of the compact and bonded to the compact, characterised in that the support means covers more than 50 percent of the surface of the compact and the compact presents an arcuate formation, salient in relation to the support means, capable of abrading a workpiece. The abrasive body has application as an insert for drill bits.

Rotary drills used for oil and gas well drilling and core drilling generally comprise a drill bit having formed thereon a plurality of preformed sockets in which cutting elements or components are mounted. The cutting elements or components may be brazed, force fitted or heat shrunk into the sockets. Typical cutting elements used in the prior art are steel teeth, steel teeth laminated with tungsten carbide, inserts of cemented tungsten carbide and natural diamonds.

Cutting components for drill bits and utilising composite compacts have also been described in the literature and have been used commercially. Such cutting elements comprise an elongate pin of cemented carbide to which is bonded a composite compact, bonding being achieved through the carbide support of the composite compact. Bonding between the carbide sxupport and the elongate pin is achieved by a braze metal which has a melting point above 700°C. Such a high temperature braze, so the art teaches, is essential in order to achieve a sufficiently strong bond between the composite compact and the elongate pin. Reference in this regard may be had to the disclosures of United States Patent No. 4,225,322.

It has also been proposed to produce a cutting component utilising composite compacts by forming a pocket or recess in an elongate pin to accommodate the composite compact. The composite compact is located in the pocket or recess and then brazed thereto using a braze such as Easy Flo 45 braze. Reference in this regard may be had to the article "Design, Fabrication and Field Test Performance of Slug-type Diamond Compacts Oil Bits" by W. H. Daniels and D. A. Thompson, Journal of Energy Resources Technology, March 1979, Vol. 101 pages 41 to 45. To the best of the Applicant's knowledge, such cutting components have never been used commercially. It is believed that one of the reasons why such cutting components have not been used commercially is that a stress concentration caused by the pocket apparently makes the carbide mounting pin a weaker link. Fracture of the pin through the pocket zone occurs.

According to the present invention, there is provided a cutting element for a rotary drill comprising an elongate cemented carbide pin of right circular cylindrical shape, a sloping recess formed in one side of the pin and at an end thereof, and a tool component located in the recess and bonded to the pin and presenting a cutting edge for the element, the tool component comprising: a substantially disc-shaped abrasive compact located in a recess formed in a surface of a cemented carbide support of greater mass than the compact and bonded to the support, the one substantially circular end surface of the compact being bonded to the support and the other substantially circular end surface providing the cutting edge for the element, the cutting edge extending around at least 50 percent of the circumference of the one substantially circular end surface of the compact, and the support providing substantial backing behind the one substantially circular end surface of the compact to which it is bonded and a side support which is crescent-shaped in plan and being located in the sloping recess in the elongate pin and bonded to the pin by brazing.

Description of the Drawings

Figure 1 illustrates a plan view of a tool component to be used in an embodiment of the invention;

Figure 2 is a section along line 2—2 of Figure 1;

Figure 3 illustrates a side view of an embodiment of the invention utilising a tool component of Figures 1 and 2;

Detailed Description of an Embodiment of the Invention

The carbide support is in the form of an elongate cylindrical pin having the recess formed in one side and an end thereof. Such a tool component has particular application as a cutting element for a drill bit. The elongate pin may be secured by brazing, force fitting or heat shrinking into a preformed socket in the working surface of a drill bit. Alternatively, a side surface of the elongate pin may be removed, for example by grinding, to produce a surface which is complemental with that of the working surface of a drill bit. Such a component may then be brazed directly to the working surface. The elongate pin, being an integral whole, means that there is no carbide-to-carbide braze joint as is the case with other cutting components of the prior art, notably that described in United States Patent No. 4,225,322. The carbide-to-carbide joint in these prior art components is a zone of potential weakness where failure can occur. Moreover the carbide provides not only back, but also side support, for the compact.

The abrasive compact may be any abrasive compact known in the art, but is preferably a diamond compact. The cemented carbide may also be any known in the art and is preferably cemented tungsten carbide.

The cutting edge extends around at least 50 percent of the circumference of the one substantially circular end surface of the compact.

The tool component of the invention may be made by placing the components necessary for compact formation in a cavity or recess provided in a pre-formed cemented carbide support, exposing the carbide support containing the compact-forming components to conditions of temperature and pressure suitable to produce a compact of the components, recovering the product so produced and removing, for example by grinding, carbide from that product to produce the tool component. The methods and conditions necessary for compact manufacture are to be found in the above-mentioned United States patent specifications.

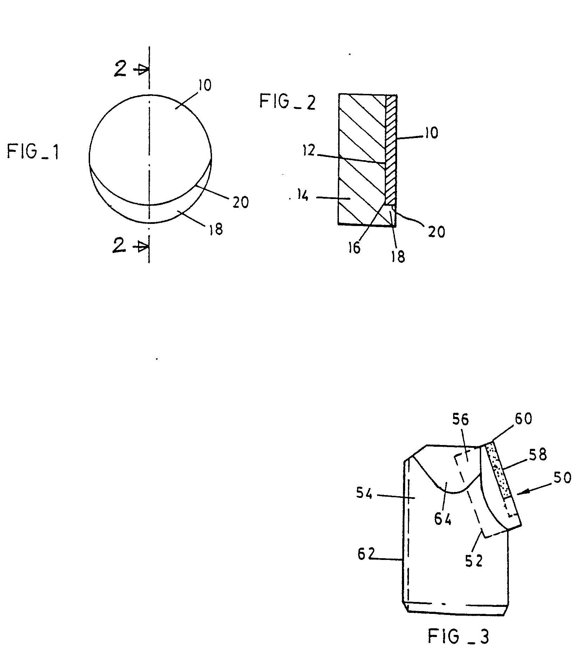

An embodiment of the invention will now be described with reference to the accompanying drawings. Referring to Figures 1 and 2, there is shown a tool component comprising a substantially disc-shaped abrasive compact 10 located in a recess 12 in a cemented carbide support 14. Bonding of the compact to the support may be achieved through a braze layer or directly without such a layer. The cemented carbide provides substantial support for the major substantially circular surface 16 of the compact, and also support 18 for a portion 20 of the side of the compact. The side support 18 is crescent-shaped in plan, as can be seen from Figure 1. This tool component is useful as a cutting element for a rotary drill and is bonded to an elongate cemented carbide pin in the manner illustrated by Figure 3. Referring to this Figure, component 50 is located in a sloping recess 52 formed in one side of an elongate cemented carbide pin 54 of right circular cylindrical shape. The location of the component in the recess is such that the carbide support 56 is received by the recess and the compact 58 presents a cutting edge 60. The carbide support is bonded to the carbide pin using a suitable braze. The pin 54 has a longitudinal groove 62 which assists in the location of the pin in a drill bit and for the removal of gasses, if the pin is brazed into the drill bit. Furthermore, the top edges 64 on either side of the pin are cut away to provide sufficient clearance in use.

**Claim**

A cutting element for a rotary drill comprising an elongate cemented carbide pin (54) of right circular cylindrical shape, a sloping recess (52) formed in one side of the pin and at an end thereof, and a tool component (50) located in the recess and bonded to the pin and presenting a cutting edge (60) for the element, the tool component comprising: a substantially disc-shaped abrasive compact (58) located in a recess formed in a surface of a cemented carbide support (56) of greater mass than the compact and bonded to the support, the one substantially circular end surface of the compact being bonded to the support and the other substantially circular end surface providing the cutting edge for the element, the cutting edge extending around at least 50 percent of the circumference of the one substantially circular end surface of the compact, and the support providing substantial backing behind the one substantially circular end surface of the compact to which it is bonded and a side support which is crescent-shaped in plan and being located in the sloping recess in the elongate pin and bonded to the pin by brazing.

**Patentanspruch**

Schneidelement für einen Drehbohrer, mit einem länglichen Stift (54) aus zementiertem Karbid, der genau kreisförmige, zylindrische Form hat, einer schrägen Ausnehmung (52), die in einer Seite und an einem Ende des Stiftes ausgebildet ist, und einem Werkzeugteil (50), das in der Ausnehmung angeordnet ist, mit dem Stift verbondet ist und eine Schneidkante (60) für das Element bildet, wobei das Werkzeugteil aufweist: ein im wesentlichen scheibenförmiges abrasives Kompakt (58), das in einer Ausnehmung angeordnet ist, die in einer Fläche eines eine größere Masse als das Kompakt aufweisenden Trägers (56) aus zementiertem Karbid ausgebildet ist und mit dem Träger verbondet ist, wobei die eine im wesentlichen kreisförmige Stirnfläche des Kompakts mit dem Träger verbondet ist und die andere im wesentlichen kreisförmige Stirnfläche die Schneidkante für das Element aufweist, die Schneidkante sich um mindestens 50 Prozent des Umfangs der einen im wesentlichen kreisförmigen Stirnfläche des Kompakts erstreckt und der Träger stabilen Rückhalt hinter der einen im wesentlichen kreisförmigen Stirnfläche des Kompakts, mit der er verbondet ist, und einem seitlichen Halteteil schafft, der in Draufsicht sichelförmig ist und in der schrägen Ausnehmung in dem länglichen Stift angeordnet und durch Löten mit dem Stift verbondet ist.

**Revendication**

Un élément de coupe pour foret rotatif comportant un téton allongé de carbure cémenté (54) de forme cylindrique circulaire droit, une cavité inclinée (52) formée dans un des côtés du téton et à l'extrémité de celui-ci, et un composant d'outil (50) placé dans la cavité et lié au téton et présentant un bord de coupe (60) pour l'élément, le composant d'outil comportant: un agglomérat abrasif sensiblement en forme de disque (58) placé dans une cavité formée dans une surface du support de carbure cémenté (56) de masse plus grande que l'agglomérat et lié au support, l'une des surfaces d'extrémité sensiblement circulaires l'agglomérat étant liée au support et l'autre surface d'extrémité sensiblement circulaire fournissant le bord de coupe pour l'élément, le bord de coupe occupant au moins 50 pourcent de la circonférence de la dite une des surfaces d'extrémité sensiblement circulaires de l'agglomérat, et le support constituant l'appui important derrière la dite une des surfaces d'extrémité sensiblement circulaires de l'agglomérat à laquelle il est lié et un support latéral qui en plan a la forme d'un croissant et étant placé dans une cavité inclinée du téton allongé et lié au téton par brasage.

0 104 893

FIG_1

FIG_2

FIG_3

1